# EUROPÄISCHE PATENTANMELDUNG

(11) **EP 4 675 129 A1**
(43) Veröffentlichungstag der Anmeldung: **07.01.2026**
(21) Anmeldenummer: 24186094.9
(22) Anmeldetag: 02.07.2024
(51) Int. Cl.: F16H 1/46

(54) **MEHRSTUFIGES PLANETENGETRIEBE MIT ZWEI HOHLRÄDERN**

(71) Anmelder: maxon international ag, 6072 Sachseln (CH)
(72) Erfinder: Eble, Florian, 79211 Denzlingen (DE); von Lehmann, Ernst, 79286 Glottertal (DE)
(74) Vertreter: Grünecker Patent- und Rechtsanwälte PartG mbB

(57) **Zusammenfassung**

Die vorliegende Erfindung betriff ein Planetengetriebe mit mindestens zwei Getriebestufen, einem antriebsseitigen Hohlrad und einem abtriebsseitigen Hohlrad, wobei eine Hohlradverzahnung des abtriebsseitigen Hohlrades und eine Hohlradverzahnung des antriebsseitigen Hohlrads koaxial zu einer Achse des Planetengetriebes ausgebildet sind, wobei mindestens eine der Getriebestufen dem antriebsseitigen Hohlrad und eine der Getriebestufen dem abtriebsseitigen Hohlrad zugeordnet ist und jede Getriebestufe ein Sonnenrad, zumindest ein Planetenrad sowie einen Planetenträger umfasst, wobei das zumindest eine Planetenrad mit dem Sonnenrad und der zugehörigen Hohlradverzahnung des antriebsseitigen Hohlrads oder des abtriebsseitigen Hohlrads kämmt und an dem Planetenträger um eine relativ zum Planetenträger ortsfeste Planetenradachse drehbar gelagert angeordnet ist, wobei das antriebsseitige Hohlrad feststehend ist und das abtriebsseitige Hohlrad einen Abtrieb des Planetengetriebes ausbildet. Erfindungsgemäß ist vorgesehen, dass das antriebsseitige Hohlrad den Planetenträger der dem abtriebsseitigen Hohlrad zugeordneten Getriebestufe ausbildet.

## Beschreibung

Die vorliegende Erfindung bezieht sich auf ein Planetengetriebe gemäß dem Oberbegriff des Anspruchs 1.

Ein gattungsgemäßes Planetengetriebe umfasst mindestens zwei Getriebestufen, ein antriebsseitiges Hohlrad und ein abtriebsseitiges Hohlrad, wobei eine Hohlradverzahnung des abtriebsseitigen Hohlrades und eine Hohlradverzahnung des antriebsseitigen Hohlrads koaxial zu einer Achse des Planetengetriebes ausgebildet sind, wobei mindestens eine der Getriebestufen dem antriebsseitigen Hohlrad und eine der Getriebestufen dem abtriebsseitigen Hohlrad zugeordnet ist und jede Getriebestufe ein Sonnenrad, zumindest ein Planetenrad sowie einen Planetenträger umfasst, wobei das zumindest eine Planetenrad mit dem Sonnenrad und der zugehörigen Hohlradverzahnung des antriebsseitigen Hohlrads oder des abtriebsseitigen Hohlrads kämmt und an dem Planetenträger um eine relativ zum Planetenträger ortsfeste Planetenradachse drehbar gelagert angeordnet ist, wobei das antriebsseitige Hohlrad feststehend ist und das abtriebsseitige Hohlrad einen Abtrieb des Planetengetriebes ausbildet.

Ein gattungsgemäßes Planetengetriebe ist beispielsweise aus der US 2003/220169 A1 bekannt. Das derartige Planetengetriebe ist für Anwendungen vorgesehen, bei denen ein kleines und leichtes Planetengetriebe bei einer hohen Drehmomenterzeugung erforderlich ist. Trotzdem weist das bekannte Planetengetriebe insbesondere in einer axialen Richtung des Planetengetriebes eine relativ große Ausdehnung auf.

Die Aufgabe der vorliegenden Erfindung besteht daher darin, ein Planetengetriebe bereitzustellen, das eine weitere Verbesserung hinsichtlich des benötigten Bauraums und der möglichen Drehmomenterzeugung aufweist.

Die Aufgabe wird durch die Merkmale des unabhängigen Anspruchs 1 gelöst. Demnach liegt eine erfindungsgemäße Lösung der Aufgabe vor, wenn das antriebsseitige Hohlrad den Planetenträger der dem abtriebsseitigen Hohlrad zugeordneten Getriebestufe ausbildet.

Durch die erfindungsgemäße Lösung kann das Planetengetriebe kompakter ausgeführt werden und damit der benötigte Bauraum im Verhältnis zur erforderlichen Drehmomenterzeugung verringert werden.

Die jeweils einem Planentenrad zugehörige Planetenradachse ist eine geometrische Achse, um die sich das jeweilige Planentenrad dreht.

Vorteilhafte Ausgestaltungen der vorliegenden Erfindung sind Gegenstand der Unteransprüche.

In einer bevorzugten Ausführungsform der vorliegenden Erfindung ist ein Innenradius der Hohlradverzahnung des abtriebsseitigen Hohlrades größer als ein Innenradius der Hohlradverzahnung des antriebsseitigen Hohlrads ausgebildet. Durch den größeren Innenradius der Hohlradverzahnung des abtriebsseitigen Hohlrades kann in der dem abtriebsseitigen Hohlrad zugeordneten Getriebestufe eine größere Übersetzung und ein größeres Drehmoment als in der/den dem antriebsseitigen Hohlrad zugeordneten Getriebestufe/n erzeugt werden. Vorzugsweise weisen das antriebsseitige Hohlrad und das abtriebsseitige Hohlrad jeweils einen konstanten Innenradius der jeweiligen Hohlradverzahnung auf. Dadurch wird die Fertigung des Planetengetriebes vereinfacht.

Vorzugsweise ist ein Verhältnis des Innenradius der Hohlradverzahnung des abtriebsseitigen Hohlrades gegenüber dem Innenradius der Hohlradverzahnung des antriebsseitigen Hohlrads grösser als 1,05 und liegt bevorzugt im Bereich von 1,05 und 2, weiter vorzugsweise im Bereich von 1,2 und 1.7. In diesen Bereichen ergibt sich ein vorteilhaftes Verhältnis der Übersetzungen der jeweiligen Getriebestufen in Bezug auf den benötigten Bauraum des Planetengetriebes.

Außerdem vorzugsweise ist ein radialer Abstand der Planetenradachse des zumindest einen Planetenrads der dem abtriebsseitigen Hohlrad zugeordneten Getriebestufe von der Achse kleiner als der Innenradius der Hohlradverzahnung des antriebsseitigen Hohlrads. Dies ermöglicht einen kompakten Aufbau. Das antriebsseitige Hohlrad kann hierfür einen radial nach innen gerichteten Vorsprung aufweisen, an dem das mindestens eine Sonnenrad der dem abtriebsseitigen Hohlrad zugeordneten Getriebestufe drehbar gelagert angeordnet ist.

In einer besonders bevorzugten Ausführungsform der vorliegenden Erfindung umfasst das abtriebsseitige Hohlrad einen Hohlzylinder, der das antriebsseitige Hohlrad in einer radialen Richtung zu der Achse zumindest entlang eines Abschnitts der Achse umfasst. Vorzugsweise bildet der Hohlzylinder den Abtrieb aus. Dies ermöglicht einen kompakten Aufbau.

Vorzugsweise ist der Hohlzylinder radial auf dem antriebsseitigen Hohlrad gelagert. Dadurch erfolgt eine stabile Lagerung des abtriebsseitigen Hohlrads, die trotzdem einen kompakten Aufbau des Planetengetriebes erlaubt. Weiter vorzugsweise ist der Hohlzylinder mittels Wälzlager, besonders bevorzugt mittels Kugellager, auf dem antriebsseitigen Hohlrad gelagert.

Außerdem vorzugsweise ist das abtriebsseitige Hohlrad mit der Hohlradverzahnung des abtriebsseitigen Hohlrades und dem Hohlzylinder einstückig ausgebildet oder sind der Hohlzylinder und die Hohlradverzahnung des abtriebsseitigen Hohlrades als separate Bauteile ausgebildet, wobei der Hohlzylinder und die Hohlradverzahnung des abtriebsseitigen Hohlrades drehfest miteinander verbunden sind. Das einstückige abtriebsseitige Hohlrad liefert eine besonders zuverlässige Kraftübertragung. Hingegen kann bei dem Hohlzylinder als separates Bauteil der Hohlzylinder aus einem leichteren Werkstoff als die Hohlradverzahnung des abtriebsseitigen Hohlrades hergestellt werden, wodurch das Gewicht des Planetengetriebes gesenkt werden kann.

In einer bevorzugten Ausführung bildet der Hohlzylinder den Abtrieb des Planetengetriebes aus.

Außerdem vorzugsweise ist ein Außendurchmesser der Hohlradverzahnung des abtriebsseitigen Hohlrades kleiner oder gleich einem Außendurchmesser des Hohlzylinders. Dadurch ergibt sich ein kompakter Aufbau des Planetengetriebes.

Gemäß einer bevorzugten Ausführungsform ist bei in einer Abtriebsrichtung aufeinanderfolgenden Getriebestufen der Planetenträger der vorderen Getriebestufe mit dem Sonnenrad der hinteren Getriebestufe drehfest miteinander verbunden oder integral ausgebildet. Dies ermöglicht einen einfachen und kompakten Aufbau des Planetengetriebes und der Kopplung der in der Abtriebsrichtung letzten dem antriebsseitigen Hohlrad zugeordneten Getriebestufe mit der dem abtriebsseitigen Hohlrad zugeordneten Getriebestufe.

In einer bevorzugten Ausführungsform weist das Planetengetriebe mindestens drei, vorzugsweise mindestens vier, besonders bevorzugt fünf, dem antriebsseitigen Hohlrad zugeordnete Getriebestufen auf. Dadurch ergibt sich eine vorteilhafte Übersetzung.

Gemäß einer bevorzugten Ausführungsform weist die dem abtriebsseitigen Hohlrad zugeordnete Getriebestufe eine Stützscheibe auf, wobei das zumindest eine Planetenrad zwischen der Stützscheibe und dem antriebsseitigen Hohlrad angeordnet ist und an dem antriebsseitigen Hohlrad und der Stützscheibe um die Planetenradachse drehbar gelagert angeordnet ist, wobei die Planetenradachse relativ zu dem antriebsseitigen Hohlrad und relativ zu der Stützscheibe ortsfest ist. Dadurch ergibt sich ein stabiler Aufbau der dem abtriebsseitigen Hohlrad zugeordneten Getriebestufe.

In einer weiteren bevorzugten Ausführungsform umfasst jede Getriebestufe zumindest drei Planetenräder, wobei jede Getriebestufe vorzugsweise drei oder vier Planetenräder umfasst, wobei weiter vorzugsweise die dem abtriebsseitigen Hohlrad zugeordnete Getriebestufe vier Planetenräder und die dem antriebsseitigen Hohlrad zugeordneten Getriebestufe/n drei Planetenräder umfassen. Dies erzeugt eine stabile und zuverlässige Drehmomentübertragung durch das Planetengetriebe.

Gemäß einer bevorzugten Ausführungsform ist ein zu der Achse senkrechte maximale Durchmesser des Palentengetriebes kleiner als 25 mm. Bei derartigen Durchmessern sind die Vorteile der vorher genannten Ausführungsformen besonders relevant.

Zudem ist die Erfindung auf eine Antriebsvorrichtung mit einem Planetengetriebe gemäß einem der oberhalb beschriebenen Ausführungsbeispiele des erfindungsgemäßen Planetengetriebes und einem Elektromotor, der einen Antrieb des Planetengetriebes ausbildet, gerichtet.

Gemäß einer Ausführungsform der Antriebsvorrichtung treibt der Elektromotor das Sonnenrad einer in der Abtriebsrichtung ersten Getriebestufe an.

Gemäß einer weiteren Ausführungsform der Antriebsvorrichtung ist die Antriebsvorrichtung als Radantrieb ausgebildet. Das Planetengetriebe ist für einen derartigen Antrieb besonders geeignet.

Gemäß einer weiteren Ausführungsform der Antriebsvorrichtung ist die Antriebsvorrichtung als Gelenkantrieb von Robotern ausgebildet. Das Planetengetriebe ist für einen derartigen Antrieb besonders geeignet.

Nachfolgend werden zwei Ausführungsbeispiele eines erfindungsgemäßen Planetengetriebes anhand von Zeichnungen näher erläutert.

In den Zeichnungen zeigen:
- Figur 1:: einen axialen Längsschnitt durch ein erstes Ausführungsbeispiel eines erfindungsgemäßen Planetengetriebes in einer ersten Position der Getriebestufen und einen ungeschnittenen Elektromotor als Antrieb,
- Figur 2:: einen axialen Längsschnitt durch das erste Ausführungsbeispiel des erfindungsgemäßen Planetengetriebes in einer zweiten Position der Getriebestufen und den ungeschnittenen Elektromotor als Antrieb,
- Figur 3:: einen axialen Längsschnitt durch ein zweites Ausführungsbeispiel eines erfindungsgemäßen Planetengetriebes in einer ersten Position der Getriebestufen und einen ungeschnittenen Elektromotor als Antrieb,
- Figur 4:: einen axialen Längsschnitt durch das zweite Ausführungsbeispiel des erfindungsgemäßen Planetengetriebes in einer zweiten Position der Getriebestufen und den ungeschnittenen Elektromotor als Antrieb.

In den folgenden Abbildungen sind gleiche Teile mit gleichen Bezugszeichen versehen. Sofern eine Figur Bezugszeichen enthält, auf die in der zugehörigen Figurenbeschreibung nicht explizit eingegangen wird, wird auf vorherige oder nachfolgende Figurenbeschreibungen verwiesen.

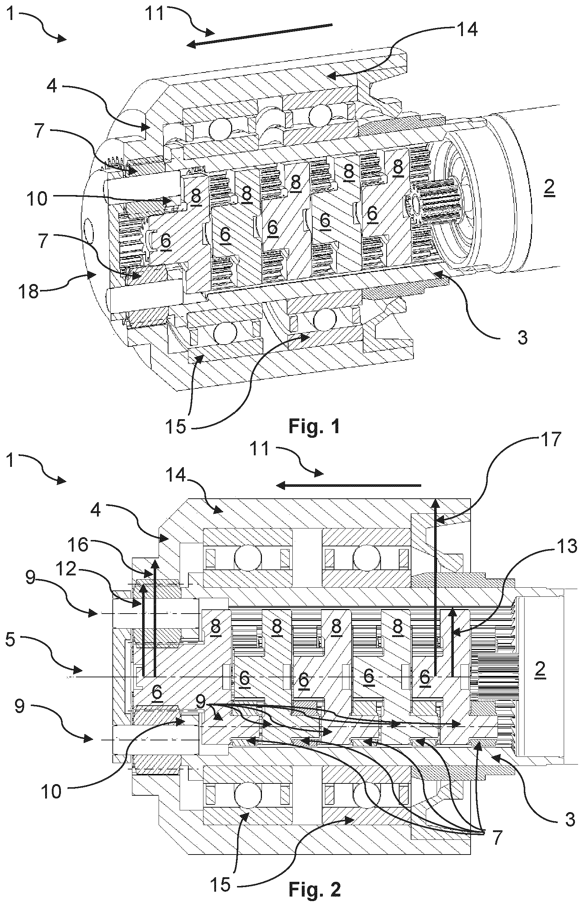

Die Figur 1 und Figur 2 zeigen axiale Längsschnitte durch ein erstes Ausführungsbeispiel des erfindungsgemäßen Planetengetriebes 1 und einen ungeschnittenen Elektromotor 2 als Antrieb, wobei die Getriebestufen des Planetengetriebes 1 in den Figuren 1 und 2 in unterschiedlichen Positionen gezeigt sind. Das erste Ausführungsbeispiel ist ein Planetengetriebe 1 mit einem antriebsseitigen Hohlrad 3 und einem abtriebsseitigen Hohlrad 4, wobei eine Hohlradverzahnung des abtriebsseitigen Hohlrades 4 und eine Hohlradverzahnung des antriebsseitigen Hohlrads 3 koaxial zu einer Achse 5 des Planetengetriebes 1 ausgebildet sind. Das Planetengetriebe 1 umfasst sechs Getriebestufen, wobei fünf der Getriebestufen dem antriebsseitigen Hohlrad 3 und eine der Getriebestufen dem abtriebsseitigen Hohlrad 4 zugeordnet sind. Jede Getriebestufe umfasst ein Sonnenrad 6, zumindest ein Planetenrad 7 sowie einen Planetenträger 8, wobei das zumindest eine Planetenrad 7 mit dem zugehörigen Sonnenrad 6 und der zugehörigen Hohlradverzahnung des antriebsseitigen Hohlrads 3 oder des abtriebsseitigen Hohlrads 4 kämmt und an dem Planetenträger 8 um eine relativ zum Planetenträger 8 ortsfeste Planetenradachse 9 drehbar gelagert angeordnet ist. In dem gezeigten ersten Ausführungsbeispiel des Planetengetriebes, umfassen die dem antriebsseitigen Hohlrad 3 zugeordneten Getriebestufen drei Planetenräder 7 und die dem abtriebsseitigen Hohlrad 4 zugeordneten Getriebestufe vier Planetenräder 7. Das Planetengetriebe 1 ist derart ausgebildet, dass das antriebsseitige Hohlrad 3 feststehend ist und das abtriebsseitige Hohlrad 4 einen Abtrieb des Planetengetriebes 1 ausbildet. Erfindungsgemäß ist vorgesehen, dass das antriebsseitige Hohlrad 3 den Planetenträger 8 der dem abtriebsseitigen Hohlrad 4 zugeordneten Getriebestufe ausbildet. Hierfür weist das antriebsseitige Hohlrad 4 in dem gezeigten Ausführungsbeispiel einen radial nach innen gerichteten Vorsprung 10 auf, an dem die Planetenträger 8 der dem abtriebsseitigen Hohlrad 4 zugeordneten Getriebestufe drehbar gelagert angeordnet sind.

In dem Ausführungsbeispiel ist bei in einer Abtriebsrichtung 11 aufeinanderfolgenden Getriebestufen der Planetenträger 8 der vorderen Getriebestufe mit dem Sonnenrad 7 der hinteren Getriebestufe integral ausgebildet, wobei das Sonnenrad 7 der in der Abtriebsrichtung 11 ersten Getriebestufe durch den Elektromotor 2 angetrieben wird.

Weiter ist ein Innenradius 12 der Hohlradverzahnung des abtriebsseitigen Hohlrades 4 größer als ein Innenradius 13 der Hohlradverzahnung des antriebsseitigen Hohlrads 3 ausgebildet, wobei der Innenradius 12 der Hohlradverzahnung des abtriebsseitigen Hohlrades 4 und der Innenradius 13 der Hohlradverzahnung des antriebsseitigen Hohlrads 3 konstant sind.

Daneben umfasst das abtriebsseitige Hohlrad 4 einen Hohlzylinder 14, der das antriebsseitige Hohlrad 3 in einer radialen Richtung zu der Achse 5 zumindest entlang eines Abschnitts der Achse 5 umfasst, wobei der Hohlzylinder 14 radial auf dem antriebsseitigen Hohlrad 3 mittels Kugellager 15 gelagert ist. Das abtriebsseitige Hohlrad 4 ist hierbei einstückig aus der Holradverzahnung des abtriebsseitigen Hohlrades und dem Hohlzylinder 14 ausgebildet, wobei ein Außendurchmesser 16 der Hohlradverzahnung des abtriebsseitigen Hohlrades 4 kleiner als ein Außendurchmesser 17 des Hohlzylinders 14 ist. Der Hohlzylinder 14 bildet dabei den Abtrieb des Planetengetriebes 1 aus.

Weiter weist die dem abtriebsseitigen Hohlrad 4 zugeordnete Getriebestufe eine Stützscheibe 18 auf, wobei die Planetenräder 7 der dem abtriebsseitigen Hohlrad 4 zugeordneten Getriebestufe zwischen der Stützscheibe 18 und dem antriebsseitigen Hohlrad 3, als Planetenträger 8 der dem abtriebsseitigen Hohlrad 4 zugeordneten Getriebestufe, angeordnet sind und an dem antriebsseitigen Hohlrad 3 und der Stützscheibe 18 um die jeweiligen Planetenradachsen 9 drehbar gelagert angeordnet sind.

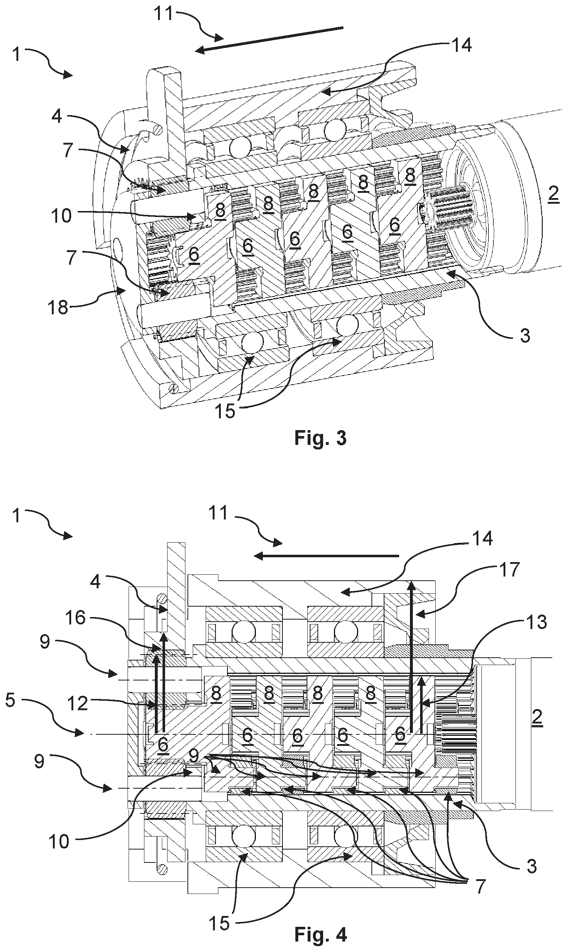

Die Figuren 3 und 4 zeigen axiale Längsschnitte durch ein zweites Ausführungsbeispiel eines erfindungsgemäßen Planetengetriebes 1 und einen ungeschnittenen Elektromotor 2 als Antrieb, wobei die Getriebestufen des Planetengetriebes 1 in den Figuren 3 und 4 in unterschiedlichen Positionen gezeigt sind. Das zweite Ausführungsbeispiel unterscheidet sich von dem ersten Ausführungsbeispiel darin, dass der Hohlzylinder 14 und die Hohlradverzahnung des abtriebsseitigen Hohlrades 4 als separate Bauteile ausgebildet sind, wobei der Hohlzylinder 14 und die Hohlradverzahnung des abtriebsseitigen Hohlrades 4 drehfest miteinander verbunden sind.

### Liste der Bezugszeichen

- 1: Planetengetriebe
- 2: Elektromotor
- 3: Antriebsseitiges Hohlrad
- 4: Abtriebsseitiges Hohlrad
- 5: Achse
- 6: Sonnenrad
- 7: Planetenrad
- 8: Planetenträger
- 9: Planetenradachse
- 10: Vorsprung
- 11: Abtriebsrichtung
- 12: Innenradius der Hohlradverzahnung des abtriebsseitigen Hohlrades
- 13: Innenradius der Hohlradverzahnung des antriebsseitigen Hohlrades
- 14: Hohlzylinder
- 15: Kugellager
- 16: Außendurchmesser der Hohlradverzahnung des abtriebsseitigen Hohlrades
- 17: Außendurchmesser des Hohlzylinders
- 18: Stützscheibe

## Patentansprüche

1. Planetengetriebe (1) mit mindestens zwei Getriebestufen, einem antriebsseitigen Hohlrad (3) und einem abtriebsseitigen Hohlrad (4), wobei eine Hohlradverzahnung des abtriebsseitigen Hohlrades (4) und eine Hohlradverzahnung des antriebsseitigen Hohlrads (3) koaxial zu einer Achse (5) des Planetengetriebes (1) ausgebildet sind, wobei mindestens eine der Getriebestufen dem antriebsseitigen Hohlrad (3) und eine der Getriebestufen dem abtriebsseitigen Hohlrad (4) zugeordnet ist und jede Getriebestufe ein Sonnenrad (6), zumindest ein Planetenrad (7) sowie einen Planetenträger (8) umfasst, wobei das zumindest eine Planetenrad (7) mit dem Sonnenrad (6) und der zugehörigen Hohlradverzahnung des antriebsseitigen Hohlrads (3) oder des abtriebsseitigen Hohlrads (4) kämmt und an dem Planetenträger (8) um eine relativ zum Planetenträger (8) ortsfeste Planetenradachse (9) drehbar gelagert angeordnet ist, wobei das antriebsseitige Hohlrad (3) feststehend ist und das abtriebsseitige Hohlrad (4) einen Abtrieb des Planetengetriebes (1) ausbildet, **dadurch gekennzeichnet, dass** das antriebsseitige Hohlrad (3) den Planetenträger (8) der dem abtriebsseitigen Hohlrad (4) zugeordneten Getriebestufe ausbildet.

2. Planetengetriebe (1) gemäß Anspruch 1, **dadurch gekennzeichnet, dass** ein Innenradius (12) der Hohlradverzahnung des abtriebsseitigen Hohlrades (4) größer als ein Innenradius (13) der Hohlradverzahnung des antriebsseitigen Hohlrads (3) ausgebildet ist.

3. Planetengetriebe (1) gemäß Anspruch 2, **dadurch gekennzeichnet, dass** ein Verhältnis des Innenradius (12) der Hohlradverzahnung des abtriebsseitigen Hohlrades (4) gegenüber dem Innenradius (13) der Hohlradverzahnung des antriebsseitigen Hohlrads (3) grösser als 1,05 ist und bevorzugt im Bereich von 1,05 und 2, weiter vorzugsweise im Bereich von 1,2 und 1,7 liegt.

4. Planetengetriebe (1) gemäß einem der Ansprüche 2 oder 3, **dadurch gekennzeichnet, dass** ein radialer Abstand der Planetenradachse (9) des zumindest einen Planetenrads (7) der dem abtriebsseitigen Hohlrad (4) zugeordneten Getriebestufe von der Achse (5) kleiner als der Innenradius (13) der Hohlradverzahnung des antriebsseitigen Hohlrads (3) ist.

5. Planetengetriebe (1) gemäß einem der Ansprüche 1 bis 4, **dadurch gekennzeichnet, dass** das abtriebsseitige Hohlrad (4) einen Hohlzylinder (14) umfasst, der das antriebsseitige Hohlrad (3) in einer radialen Richtung zu der Achse (5) zumindest entlang eines Abschnitts der Achse (5) umfasst.

6. Planetengetriebe (1) gemäß Anspruch 5, **dadurch gekennzeichnet, dass** der Hohlzylinder (14) radial auf dem antriebsseitigen Hohlrad (3), vorzugsweise mittels Wälzlager, weiter vorzugsweise mittels Kugellager (15), gelagert ist.

7. Planetengetriebe (1) gemäß Anspruch 5 oder 6, **dadurch gekennzeichnet, dass** das abtriebsseitige Hohlrad (4) mit der Hohlradverzahnung des abtriebsseitigen Hohlrades (4) und dem Hohlzylinder (14) einstückig ausgebildet ist oder der Hohlzylinder (14) und die Hohlradverzahnung des abtriebsseitigen Hohlrades (4) als separate Bauteile ausgebildet sind, wobei der Hohlzylinder (14) und die Hohlradverzahnung des abtriebsseitigen Hohlrades (4) drehfest miteinander verbunden sind.

8. Planetengetriebe (1) gemäß einem der Ansprüche 5 bis 7, **dadurch gekennzeichnet, dass** der Hohlzylinder (14) den Abtrieb ausbildet.

9. Planetengetriebe (1) gemäß einem der Ansprüche 5 bis 8, **dadurch gekennzeichnet, dass** ein Außendurchmesser (16) der Hohlradverzahnung des abtriebsseitigen Hohlrades (4) kleiner oder gleich einem Außendurchmesser (17) des Hohlzylinders (14) ist.

10. Planetengetriebe (1) gemäß einem der Ansprüche 1 bis 9, **dadurch gekennzeichnet, dass** bei in einer Abtriebsrichtung (11) aufeinanderfolgenden Getriebestufen der Planetenträger (8) der vorderen Getriebestufe mit dem Sonnenrad (6) der hinteren Getriebestufe drehfest miteinander verbunden oder integral ausgebildet ist.

11. Planetengetriebe (1) gemäß einem der Ansprüche 1 bis 10, **dadurch gekennzeichnet, dass** das Planetengetriebe (1) mindestens drei, vorzugsweise mindestens vier, besonders bevorzugt fünf, dem antriebsseitigen Hohlrad (3) zugeordnete Getriebestufen aufweist.

12. Planetengetriebe (1) gemäß einem der Ansprüche 1 bis 11, **dadurch gekennzeichnet, dass** die dem abtriebsseitigen Hohlrad (4) zugeordnete Getriebestufe eine Stützscheibe (18) aufweist, wobei das zumindest eine Planetenrad (7) zwischen der Stützscheibe(18) und dem antriebsseitigen Hohlrad (3) angeordnet ist und an dem antriebsseitigen Hohlrad (3) und der Stützscheibe (18) um die Planetenradachse (9) drehbar gelagert angeordnet ist, wobei die Planetenradachse (9) relativ zu dem antriebsseitigen Hohlrad (3) und relativ zu der Stützscheibe (18) ortsfest ist.

13. Planetengetriebe (1) gemäß einem der Ansprüche 1 bis 12, **dadurch gekennzeichnet, dass** jede Getriebestufe zumindest drei Planetenräder (7) umfasst, wobei jede Getriebestufe vorzugsweise drei oder vier Planetenräder (7) umfasst, wobei weiter vorzugsweise die dem abtriebsseitigen Hohlrad (4) zugeordnete Getriebestufe vier Planetenräder (7) und die dem antriebsseitigen Hohlrad (3) zugeordneten Getriebestufe/n drei Planetenräder (7) umfassen.

14. Planetengetriebe (1) gemäß einem der Ansprüche 1 bis 13, **dadurch gekennzeichnet, dass** ein zu der Achse (5) senkrechte maximale Durchmesser des Palentengetriebes kleiner als 25 mm ist.

15. Antriebsvorrichtung mit einem Planetengetriebe (1) nach einem der Ansprüche 1 bis 14 und einem Elektromotor (2), der einen Antrieb des Planetengetriebes (1) ausbildet.
